(19) **Europäisches Patentamt / European Patent Office / Office européen des brevets**

(11) **EP 3 035 286 A1**

(12) **EUROPEAN PATENT APPLICATION**

(43) Date of publication:
**22.06.2016 Bulletin 2016/25**

(21) Application number: **14307087.8**

(22) Date of filing: **18.12.2014**

(51) Int Cl.:
*G06T 7/00* (2006.01)   *G06F 3/0484* (2013.01)
*G06F 3/0488* (2013.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
- **Marquant, Gwenaelle**
  **35576 Cesson-Sévigné (FR)**
- **Oisel, Lionel**
  **35576 Cesson-Sévigné (FR)**
- **Hellier, Pierre**
  **35576 Cesson-Sévigné (FR)**

(74) Representative: **Huchet, Anne**
**Technicolor**
**1, rue Jeanne d'Arc**
**92443 Issy-les-Moulineaux Cedex (FR)**

(54) **Method and device for object delineation in an image**

(57)     A method, performed by a touch screen device, for delineating an object in an image is disclosed. The method comprises obtaining, from a user input, a band around the object wherein at least one characteristic of the band depends on the presence of artifacts in the neighborhood of the object to delineate.

A device for implementing the method and a computer program product are further disclosed.

Figure 3

**Description**

1. TECHNICAL FIELD

In the following, a method for delineating an object in an image is disclosed. Such object delineation is useful for video editing applications targeting at segmenting an object within an image for various purposes, such as applying special video processing on the object itself or for cloning it into other images. Corresponding device is also disclosed.

2. BACKGROUND ART

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Methods are known for image cloning in the video processing domain. Image cloning can be described as creating a new image by duplicating a source image region into the target image. The more seamless it is, the more natural it looks. A common method to perform image cloning is a simple process of cut-and-paste with interactive image editing tools such as PhotoShop from Adobe. It is however generally labor intensive as it is difficult for users to select the source region exactly, i.e. draw a boundary that matches exactly the contours of the objects to be inserted. Moreover, it is difficult to modify the appearance of the cloned region to match the target scene. To solve the problem of seamlessly inserting an object into an image or a video, alpha blending methods have been proposed: foreground pixels are superimposed on background pixels with their opacities given by the alpha matte. Other methods, called gradient methods have also been proposed: unlike alpha blending methods which perform direct blending operation on intensities in the target image, gradient domain methods reconstruct intensities in the pasted area by solving partial differential Poisson equations in the gradient domain, as proposed by Perez et al. in "Poisson image editing" in the Proceedings of ACM SIGGRAPH'03. Poisson cloning works best when the error along the boundary of the cloned region is nearly constant, or changes smoothly. When this is not the case, as for instance when the boundary must cross an object, there is a visible smudging of the error from the boundary into the cloned area. More recently Bie et al. have proposed a method in "user-aware image cloning" in the International Journal of Computer Graphics Volume 29 Issue 6-8. Their method reduces the effect of artifacts, by analyzing the diversity of the boundary around the object of interest and correlating the diversity of the boundary to a probability of presence of an artifact. These techniques however fail when the presence of artifacts are not fully correlated with the boundary diversity around the object of interest.

Using prior art image editing tools, complex object delineation remains a painful task in situations where artifacts are present in the neighborhood of the object to delineate. Prior art techniques generally fail in precisely automatically delineating complex objects in presence of artifacts.

3. SUMMARY

A salient idea is to delineate an object in an image via a touch screen device, possibly a pressure sensitive device, by obtaining a band around the object to delineate wherein some characteristics of the band depend on the presence of artifacts in the vicinity of the object to delineate. These varying characteristics, such as the width or the pressure, are generated by a user creating the band, so as to obtain a transparency factor around the object being delineated.

To this end, a method, performed by a touch screen device, for delineating an object in an image is disclosed. The method comprises obtaining, from a user input, a band around an object wherein at least one characteristic of the band depends on the presence of artifacts in the neighborhood of the object to delineate.

According to a preferred embodiment, the characteristic of the band is its width. According to another particularly advantageous embodiment, the touch screen device is a pressure sensitive touch screen device, and the characteristic of the band comprises the pressure.

According to a particularly advantageous variant, the band comprises an inner boundary, and the method further comprises applying a contour detector to the inner boundary to fit the object to delineate.

According to another particularly advantageous variant, the band comprises an inner and an outer boundary, and the method further comprises shifting the inner boundary in the direction of the outer boundary from a constant value.

According to another particularly advantageous variant, the method further comprises obtaining a transparency factor for each pixel of the band, from a nonlinear function applied to the relative position of the pixel between the inner boundary and the outer boundary.

According to another particularly advantageous variant, the method further comprises obtaining an intermediate boundary located between the inner boundary and the outer boundary, wherein the distance between the intermediate boundary and any of the inner or outer boundary depends on the at least one characteristic.

According to another particularly advantageous variant, the method further comprises obtaining a transparency factor for each pixel of the band, from a nonlinear function applied to the relative position of the pixel between the inner boundary and the outer boundary, wherein the nonlinear function is centered to the intermediate boundary.

In a second aspect, a touch screen device for delineating an object in an image is also disclosed, wherein the touch screen device comprises means for obtaining, from a user input, a band around the object wherein at least one characteristic of the band depends on the presence of artifacts in the neighborhood of the object to delineate. In a preferred embodiment, the touch screen device is a pressure sensitive touch screen device, and the at least one characteristic comprises the pressure.

In another preferred embodiment, the characteristic of the band is its width.

In another preferred embodiment, the band comprises an inner boundary, and the device further comprises means for applying a contour detector to the inner boundary to fit the object to delineate.

In another preferred embodiment, the band further comprises an outer boundary, and the device further comprises means for shifting the inner boundary in the direction of the outer boundary from a constant value.

In another preferred embodiment, the device further comprises means for obtaining a transparency factor for each pixel of the band, from a nonlinear function applied to the relative position of the pixel between the inner boundary and the outer boundary.

In another preferred embodiment, the device further comprises means for obtaining an intermediate boundary located between the inner and the outer boundary, wherein the distance between the intermediate boundary and any of the inner or outer boundary depends on the at least one characteristic..

In another preferred embodiment, the device further comprises means for obtaining a transparency factor for each pixel of the band, from a nonlinear function applied to the relative position of the pixel between the inner and the outer boundary, wherein the nonlinear function is centered to the intermediate boundary.

In a third aspect, a device comprising at least one processor adapted to compute the steps of the delineating method in any of its embodiments is also disclosed.

In a fourth aspect, a computer-readable storage medium storing program instructions computer-executable to perform the disclosed methods, is also disclosed.

In a fifth aspect, a computer program product comprising instructions of program code for execution by at least one processor to perform the disclosed methods, is also disclosed.

While not explicitly described, the present embodiments may be employed in any combination or sub-combination. For example, the disclosed method, device, or computer program are not limited to the described characteristics of the band.

Besides, any characteristic or variant described for the delineating method is compatible with a device intended to process the disclosed method, with a computer-readable storage medium storing program instructions, and with a computer program product.

## 4. BRIEF DESCRIPTION OF THE DRAWINGS

In the drawings, an embodiment of the present invention is illustrated. It shows:

- **Figure 1** depicts a processing device for delineating an object in an image according to a specific and non-limitative embodiment of the invention;
- **Figure 2** represents an exemplary architecture of the processing device of figure 1 according to a specific and non-limitative embodiment of the invention;
- **Figure 3** represents a flow chart of a method for delineating an object in an image according to a specific and non-limitative embodiment of the invention;
- **Figure 4** represents an example of a an object to delineate in presence of artifacts, and a possible band of varying characteristics;
- **Figure 5** represents another example of a band with varying characteristics according to a specific and non-limitative embodiment of the invention;
- **Figure 6** represents three examples of functions for obtaining the transparency factor of a pixel in the band according to a specific and non-limitative embodiment of the invention.

## 5. DESCRIPTION OF EMBODIMENTS

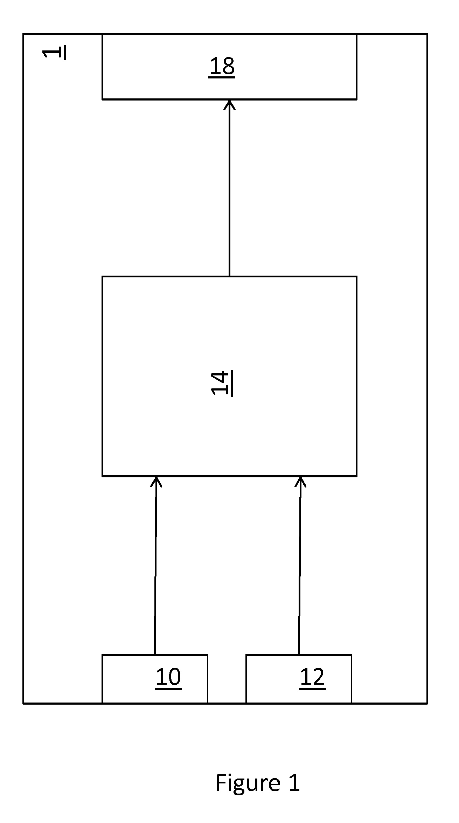

**Figure 1** depicts a processing device 1 for delineating an object in an image where a band with varying characteristics around an object to delineate is obtained from a user input. At least one characteristic of the band depends on the presence of artifacts in the neighborhood of the object to delineate.

According to a specific and non-limitative embodiment of the invention, the processing device 1 comprises an input 10 configured to receive the images comprising the objects to delineate. The images are obtained from a source. According to different embodiments of the invention, the source belongs to a set comprising:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface);

The processing device 1 also comprises an input 12 to receive drawing data from a user. Drawing data are generated by a user via a drawing mean in order to obtain a band with varying characteristics around an object to delineate. According to different embodiments of the invention, the drawing mean belongs to a set comprising:

- a touch screen sensor and its accompanying controller based firmware able to generate a variable size band from a finger trajectory over a screen;
- a pressure sensitive touch screen sensor and its accompanying controller based firmware able to generate a variable size band from a finger trajectory over a screen and real time pressure signals representative of the pressure of the finger (or any intermediate device such as a stylus for example);
- a mouse combined to other input signals (such as some keys of a keyboard), and associated to some acquisition firmware able to generate a variable size band from a mouse trajectory over a screen combined with key on / key off.

More generally any drawing mean allowing to obtain a band around an object to delineate, wherein at least one characteristic of the band depends on the presence of artifacts in the neighborhood of the object to delineate, is compatible with this invention.

The inputs 10 and 12 are linked to a processing module 14 configured to delineate an object in an image by obtaining a band with varying characteristics around an object to delineate, and according to the data captured from a drawing mean via the input 12. At least one characteristic of the band depends on the presence of artifacts in the neighborhood of the object to delineate. The band comprises an inner boundary and an outer boundary wherein the inner boundary is the boundary closer to the object to delineate. The processing module 14 is also configured to obtain a transparency factor for each pixel of the band as a nonlinear function applied to the relative position of the pixel between the inner boundary and the outer boundary. The resulting band, and its corresponding set of transparency factors are sent to an output 18 such as a display mean. In a variant the band is sent to a display mean together with the original image. In another variant, the delineated object is merged with another image via for example alpha blending by using the set of transparency factors of the band. More generally any alpha compositing method applied to the delineated object and another background image using the set of transparency factors is compatible with the invention. According to a particular embodiment the display mean is external to the device and the output 18 sends the data to display to an external display mean. According to different embodiments of the invention, the display mean, internal or external, belongs to a set comprising:

- a personal computer screen;
- a TV screen;
- a tablet;
- a smartphone screen.

More generally any display mean allowing to display a band, a corresponding delineated object, and / or the result of an alpha compositing with another image is compatible with this invention.

In a variant, the band and its corresponding set of transparency factors are stored in a memory. As an example, such information is stored in a remote or in a local memory, e.g. a video memory or a RAM, a hard disk.

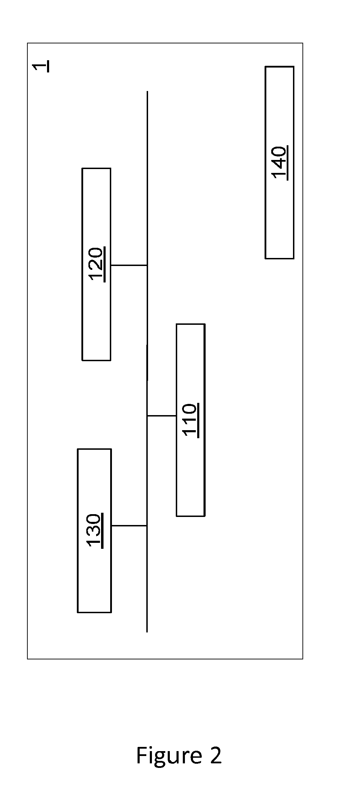

**Figure 2** represents an exemplary architecture of the processing device 1 according to a specific and non-limitative embodiment of the invention. The memory stores a database comprising images with objects to delineate. The processing device 1 comprises one or more processor(s) 110, which is(are), for example, a CPU, a GPU and/or a DSP (English acronym of Digital Signal Processor), along with internal memory 120 (e.g. RAM, ROM, EPROM). The processing device 1 comprises one or several Input/Output interface(s) 130 adapted to send to display output information and/or allow a user to enter commands and/or data (e.g. a keyboard, a mouse, a touchpad, a webcam, a display); and a power source 140 which may be external to the processing device 1. The processing device 1 may also comprise network interface(s) (not shown).

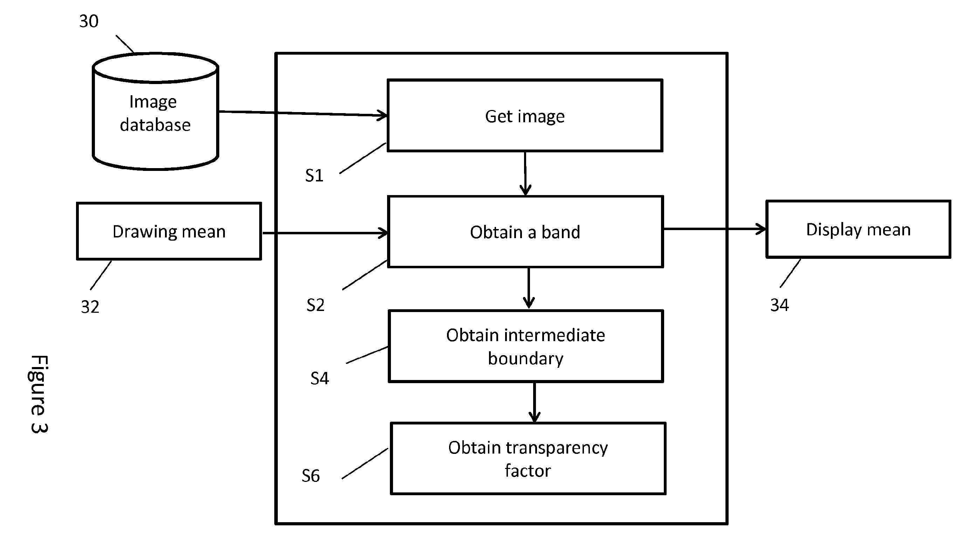

According to an exemplary and non-limitative embodiment of the invention, the processing device 1 further comprises a computer program stored in the memory 120. The computer program comprises instructions which, when executed by the processing device 1, in particular by the processor 110, make the processing device 1 carry out the processing method described with reference to figure 3. According to a variant, the computer program is stored externally to the processing device 1 on a non-transitory digital data support, e.g. on an external storage medium such as a HDD, CD-ROM, DVD, a read-only and/or DVD drive and/or a DVD Read/Write drive, all known in the art. The processing device 1 thus comprises an interface to read the computer program. Further, the processing device 1 could access one or more Universal Serial Bus (USB)-type storage devices (e.g., "memory sticks.") through corresponding USB ports (not shown).

According to exemplary and non-limitative embodiments, the processing device 1 is a device, which belongs to a set comprising:

- a mobile device ;
- a communication device ;
- a game device ;
- a tablet (or tablet computer) ;
- a laptop ;
- a still picture camera;
- a video camera ;
- a still picture server;
- a video server (e.g. a broadcast server, a video-on-demand server or a web server).

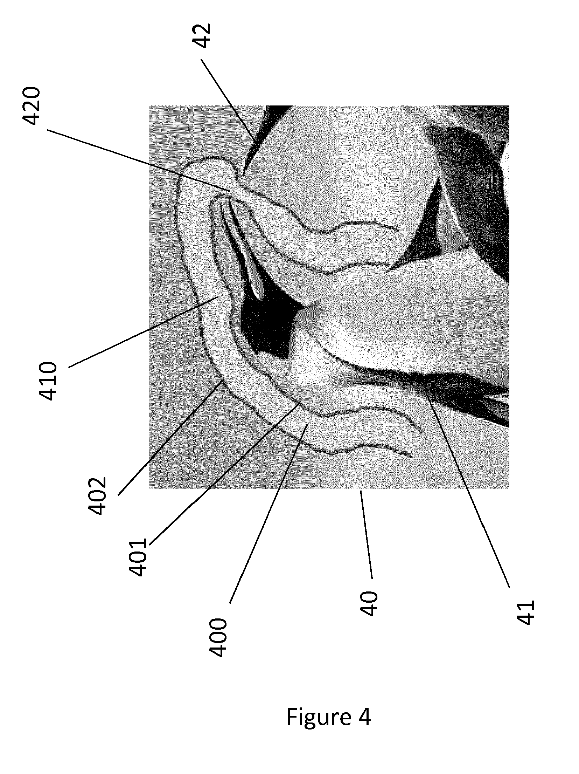

**Figure 3** represents a flow chart of a method for delineating an object in an image. Images are stored in a database 30 and are retrieved in the step S1. These images comprise various objects being superimposed over various backgrounds. Information received from a drawing mean 32 is processed in the step S2 comprising obtaining a band 400 as shown in figure 4, with varying characteristics around an object 41 to delineate. In a first embodiment, in an image retrieved in the step S1 a band is obtained from a finger trajectory on a touch screen, where the finger orientation, and consequently its surface area in contact with the touch screen varies depending whether the user wants to draw a large or thin surrounding band. In presence of artifacts 42 in the neighborhood of the object to delineate 41 as shown in figure 4, a thin band 420 is drawn, whereas in absence of artifacts, a larger band 410 is drawn, depending on the orientation of the finger on the touch screen. In this embodiment the varying characteristic of the band is the band width.

In a second embodiment, a band is obtained in an image from a finger trajectory on touch screen, equipped with pressure sensing multi-touch and pressure imaging sensors, where the finger pressure on the surface varies depending whether the user wants to indicate the presence of an artifact in the neighborhood of the object to delineate. For example the pressure of the finger indicates the user's confidence in his drawing. In a first variant a high pressure indicates a high level of confidence, meaning there is no artifact in the close neighborhood. A low pressure indicates a low level of confidence, meaning there is an artifact in the close neighborhood of the object. In another example a high pressure indicates a low level of confidence while a low pressure indicates a high level of confidence. Advantageously, the varying width of the band drawn on the sensitive touch screen is an additional varying characteristic of the band that is combined with the varying measured pressure.

The band obtained in the step S2 comprises an inner boundary 401 and an outer boundary 402 as shown in figure 4. Advantageously a contour detector algorithm is applied to the inner boundary 401 so that the inner boundary better fits the object to delineate. Alternatively or in addition to the contour detector algorithm, the inner boundary is shifted in the direction of the outer boundary 402 from a constant value. Such technique is advantageous in the case the band has been partially drawn on the object to delineate: even contour detector algorithms may fail to fit the real contour as they could align the inner boundary to some other curve located inside the object to delineate.

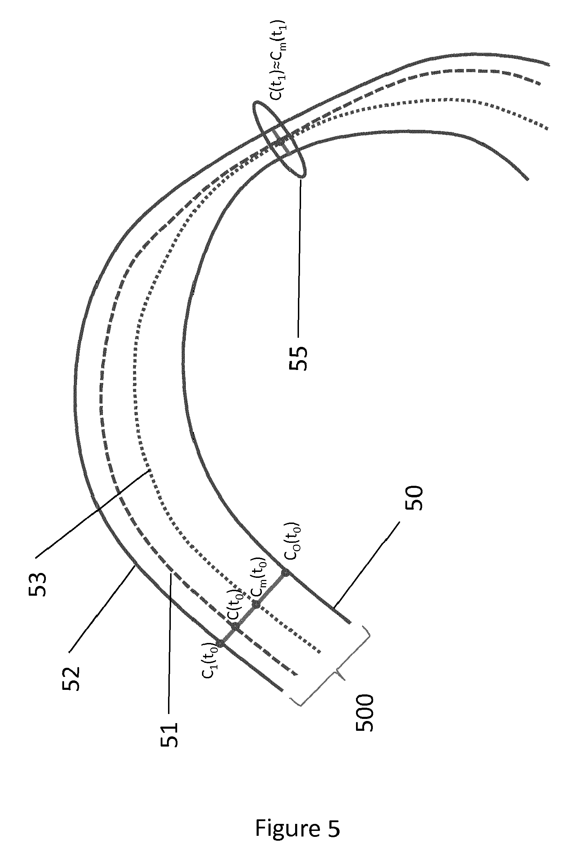

In the step S4 an intermediate boundary 51, 53, as shown in figure 5, is obtained, wherein the intermediate boundary is located between the inner 50 and the outer boundary 52. In a first variant the intermediate boundary 53 is the median curve that is located in the middle of the band. In other words the intermediate boundary is located at the same distance of both the inner and the outer boundary for any point of the intermediate boundary. More precisely, given $t$ the normalized curvilinear coordinates along the trajectory ($t$ is comprised between 0 and 1), let $C_0$ be the inner boundary, let $C_1$ be the outer boundary, let $C_m$ be the median curve between $C_0$ and $C_1$. Let $L(t)$ be the distance between the inner and the outer boundary at position $t$. $L(t)$ can also be viewed as the width of the band. $C_0(t)$, $C_1(t)$ and $C_m(t)$ are the spatial coordinates of a point in the image respectively located in the inner, outer and intermediate boundary at curvilinear coordinate t. Consequently, $C_m(t)$ can be expressed as: $C_m(t) = (C_0(t) + C_1(t))/2$.

In a second variant, the intermediate boundary 51 is located between the median curve and the outer boundary. More precisely, when the varying characteristic indicates the presence of an artifact in the neighborhood, the intermediate boundary is close to the median boundary. At the opposite, when the varying characteristic indicates the absence of artifacts in the neighborhood, the intermediate boundary is close to the outer boundary. In absence of artifacts, the background around the object is relatively uniform and a larger band is preferred so as to provide better visual results while inserting the delineated object in a target image. Indeed, the transparency factor over the band (as described further) varies more smoothly over a larger band. In the presence of an artifact, being closed to the median curve is the best compromise for being away from both the artifact and the delineated object itself. More formally, let C be the intermediate boundary and *C(t)* the spatial coordinates of the point of the intermediate boundary at curvilinear coordinate t. As for the first variant, *L(t)* is the distance between the inner and outer boundary at position t. This corresponds to the first embodiment described above where a varying characteristic of the band is its width.

Let also $L_{max}$ = $\max_{t\in[0,1]} L(t)$ be the maximum width.

Similarly let $L_{min}$ = $\min_{t\in[0,1]} L(t)$ be the minimum width of the band. *C(t)* is expressed as:

$$C(t) = (1 - \theta(t)).C_m(t) + \theta(t).C_1(t), \quad \text{with } \theta(t) = \frac{L(t) - L_{min}}{L_{max} - L_{min}}$$

Accordingly if *L(t)=L_{max}*, meaning that the band is at its largest width, *C(t)=C_1(t)*. Similarly if *L(t)=L_{min}*, meaning that the band is at its thinnest width, *C(t)=C_0(t)*. Between these extreme, the intermediate boundary is located between the outer and median boundary, and its distance to the outer boundary depends on the varying characteristic, here the width of the band.

In the second embodiment described above, where a varying characteristic of the band is the pressure detected by the pressure sensitive touch screen, *L(t)* is the pressure. More generally, any metric *L(t)* obtained from the combination of the pressure and the width of the band to obtain the intermediate boundary, according to the equations described above is compatible with the invention.

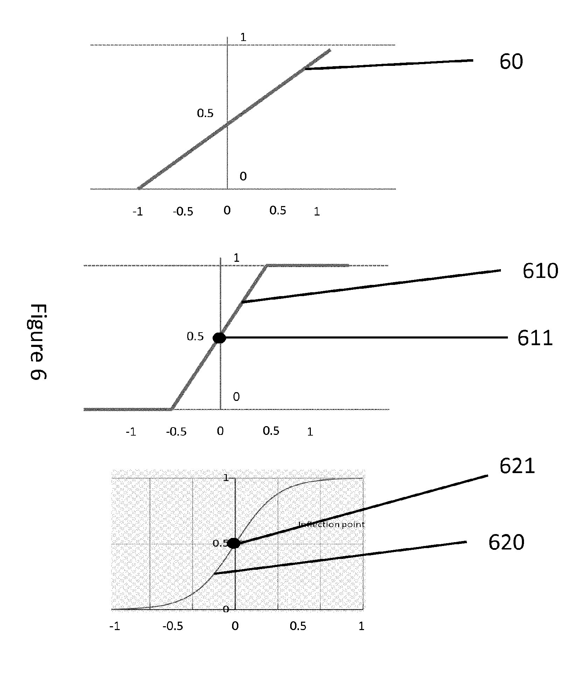

A transparency factor for each pixel of the band is obtained in the step S6 from a function applied to the relative position of the pixel between the inner boundary and the outer boundary. In a first variant, the function is a linear function 60 as shown in figure 6, and the transparency factor of a pixel of the band linearly depends from its position between the inner and the outer boundary. Advantageously the transparency factor of a pixel of the band linearly depends from its position between the inner boundary and the outer boundary in any of its variants. In a second variant the function is a sigmoid function 620 as shown in figure 6. Let $\alpha(t,x)$ be the transparency at position *P(t,x)*, given t along the curve and x the position between the inner boundary $C_0$ and the outer boundary $C_1$ wherein for example x is comprised in [-1,1] and t is comprised in [0,1]. In this example x = -1 means that position *P(t,x)* lies on $C_0$, while x = 1 means that position *P(t,x)* lies on $C_1$. In this variant, $\alpha(t,x)$ is a sigmoid function 620. Mathematically, the general expression can be written as:

$$\alpha(t,x) = \frac{a}{1 + be^{-cx}} \ ,$$

where *a, b, c* are parameters of the function. The sigmoid function allows a better differentiation than a linear function, between different areas of the band for obtaining the transparency. For pixels located close to the delineated object their corresponding transparency will be closed to none (ie fully visible), while for pixels located far away from the delineated object their corresponding transparency will be closed to full (the corresponding background, in which the delineated object is inserted, is fully visible). Alpha compositing using transparency factors obtained from a sigmoid function provide better visual results.

Advantageously, the sigmoid function applied to x is centered to the intermediate boundary, in other words the sigmoid function inflection point 621 as shown in figure 6 (meaning when $\alpha(t,x) = \frac{1}{2}$), is located on the intermediate boundary *C(t)* or *C_m(t)*. More precisely, $\alpha(t,x) = \frac{1}{2}$ , and x ∈ *C(t))*. The transparency factor of a pixel of the band is obtained from that sigmoid function applied to its position between the inner boundary and the outer boundary in any of its variants, wherein the sigmoid function is centered to the intermediate boundary. Centering the sigmoid function to the intermediate boundary that captures the proximity of an artifact provides better visual results in alpha compositing such delineated objects in presence of artifacts.

In a third variant, the function for obtaining the transparency factor is a ramp function 610 as shown in figure 6, and the transparency factor of a pixel of the band is obtained from a ramp function applied to its position between the inner and the outer boundary. Advantageously the ramp function is centered to the intermediate boundary, in other words, the ramp function inflection point 610 as show in figure 6 is located on the intermediate boundary *C(t))*. And the transparency factor of a pixel of the band is obtained from that ramp function applied to its position between the inner boundary and the outer boundary in any of its variants, wherein the ramp function is centered to the intermediate boundary. More generally any nonlinear function for obtaining the transparency factor of a pixel of the band, as a function applied to its position between the inner boundary and the outer boundary in any of its variants, wherein the nonlinear function is centered to the intermediate boundary, is compatible with this invention.

**Figure 4** represents an example of an object to delineate in presence of artifacts, and a possible band of varying characteristics. An image 40 comprises a penguin being an object 41 to delineate, in presence of an artifact 42, being a beak of another penguin. A band 400 is obtained around the penguin 41 with a varying width 410, 420. The band comprises an inner boundary 401 and an outer boundary 402. The width is the distance between the inner 401 and outer 402 boundary at any point of the band. The width is large 410 in absence of artifacts and is thin 420 when being closer to an artifact 42. In this example the width is the varying characteristic of the band by which a user, drawing the band, provides information with respect to the presence of an artifact in the neighborhood of the object to delineate.

**Figure 5** represents another example of a band with varying characteristics according to a specific and non-limitative embodiment of the invention. The band 500 comprises an inner 50 and an outer 52 boundary. The width of the band 500 varies along the band. An intermediate boundary 51, 53 is represented between the inner 50 and the outer 52 boundary. When the width of the band 500 is the thinnest 55, the intermediate boundary 51 in a variant previously described, is very close to the median curve 53 between the inner 50 and the outer 52 boundary. When the width of the band 500 is larger, the intermediate boundary is closer to the outer boundary 52.

**Figure 6** represents three examples of functions for obtaining the transparency factor of a pixel in the band according to a specific and non-limitative embodiment of the invention. A linear function 60 is represented for obtaining the transparency factor from the relative position of a pixel between the inner and the outer boundary, where the relative position is comprised between -1 and +1 and the resulting transparency factor is comprised between 0 and 1. A sigmoid function 620 is represented for obtaining the transparency factor from the relative position of a pixel between the inner and the outer boundary, where the relative position is comprised between -1 and +1 and the resulting transparency factor is comprised between 0 and 1. The sigmoid function comprises an inflection point 621, defined as the point of ordinate 0.5. Advantageously the inflection point 621 is located on the intermediate boundary 51 as shown in figure 5. Another nonlinear function 610 is represented as a ramp function for obtaining the transparency factor from the relative position of a pixel between the inner and the outer boundary, where the relative position is comprised between -1 and +1 and the resulting transparency factor is comprised between 0 and 1. The ramp function comprises an inflection point 611, defined as the point of ordinate 0.5. Advantageously the inflection point 611 is located on the intermediate boundary 51 as shown in figure 5.

## Claims

1. A method, performed by a touch screen device, for delineating an object (41) in an image (40) comprising obtaining (S2), from a user input, a band (400) around said object (41) **characterized in that** at least one characteristic of said band (400) depends on the presence of artifacts (42) in the neighborhood of said object (41) to delineate.

2. The method according to claim 1, wherein said touch screen device is a pressure sensitive touch screen device, and said at least one characteristic comprises the pressure.

3. The method according to one of claims 1 or 2, wherein said at least one characteristic comprises the width of said band.

4. The method according to one of claims 1 to 3, wherein said band (400) comprises an inner boundary (401), said method further comprising applying a contour detector to said inner boundary (401) to fit the object to delineate.

5. The method according to one of claims 1 to 3, wherein said band (400) comprises an inner boundary (401) and an outer boundary (402), said method further comprising shifting the inner boundary (401) in the direction of the outer boundary (402) from a constant value.

6. The method according to one of claims 1 to 3, wherein said band (400) comprises an inner boundary (401) and an outer boundary (402), said method further comprising obtaining (S6) a transparency factor for each pixel of said band (400), from a nonlinear function (610, 620) applied to the relative position of said pixel between said inner (401) boundary and said outer boundary (402).

7. The method according to one of claims 1 to 3, wherein said band (400) comprises an inner boundary (401) and an outer boundary (402), said method further comprising obtaining (S4) an intermediate boundary (51) located between said inner boundary (50) and said outer boundary (52), wherein the distance between said intermediate boundary (51) and any of said inner (50) or outer (52) boundary depends on said at least one characteristic.

8. The method according to claim 7, further comprising obtaining (S6) a transparency factor for each pixel of said band (400), from a nonlinear function (610, 620) applied to the relative position of said pixel between said inner boundary (50) and said outer boundary (52), wherein said nonlinear function (610, 620) is centered to said intermediate boundary (51).

9. A touch screen device (1) for delineating an object (41) in an image (40) comprising means for obtaining (S2), from a user input, a band (400) around said object (41) wherein at least one characteristic of said band (400) depends on the presence of artifacts (42) in the neighborhood of said object (41) to delineate.

10. The device (1) according to claim 9 wherein said touch screen device is a pressure sensitive touch screen device, and said at least one characteristic comprises the pressure.

11. The device (1) according to claim 9 or 10 wherein said at least one characteristic comprises the width of said band.

12. The device (1) according to one of claims 9 to 11, wherein said band (400) comprises an inner boundary (401), said device further comprising means for applying a contour detector to said inner boundary (401) to fit the object to delineate.

13. The device (1) according to one of claims 9 to 11, wherein said band (400) comprises an inner boundary (401) and an outer boundary (402), said device further comprising means for shifting the inner boundary (401) in the direction of the outer boundary (402) from a constant value.

14. The device (1) according to one of claims 9 to 11, wherein said band (400) comprises an inner boundary (401) and an outer boundary (402), said device further comprising means for obtaining (S6) a transparency factor for each pixel of said band (400), from a nonlinear function (610, 620) applied to the relative position of said pixel between said inner (401) boundary and said outer boundary (402).

15. A computer program product comprising instructions of program code for execution by at least one processor for delineating an object (41) in an image (40) comprising instructions of program code for obtaining (S2), from a user input, a band (400) around said object (41) wherein at least one characteristic of said band (400) depends on the presence of artifacts (42) in the neighborhood of said object (41) to delineate.

Figure 1

Figure 2

Figure 3

Figure 4

Figure 5

Figure 6

EP 3 035 286 A1

**EUROPEAN SEARCH REPORT**

Europäisches Patentamt
European Patent Office
Office européen des brevets

Application Number

EP 14 30 7087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/198175 A1 (SUN JIAN [CN] ET AL) 21 August 2008 (2008-08-21) | 1,3-15 | INV. G06T7/00 G06F3/0484 G06F3/0488 |
| Y | * abstract * * paragraph [0022] * * paragraph [0028] - paragraph [0029] * * paragraph [0070] - paragraph [0074] * * figure 6 * | 2,12 | |
| Y | EP 1 674 977 A2 (MICROSOFT CORP [US]) 28 June 2006 (2006-06-28) * abstract * * paragraph [0072] * * figure 12 * | 2,12 | |
| X | JUE WANG ET AL: "Soft scissors", ACM TRANSACTIONS ON GRAPHICS, vol. 26, no. 3, 29 July 2007 (2007-07-29), page 9, XP055019398, ISSN: 0730-0301, DOI: 10.1145/1276377.1276389 * abstract * * page 9-1, column 1, section 1 * * page 9-2, column 1, section 3.1 * * page 9-3, column 2, section 4 - page 9-4, column 1, paragraph 1 * * figure 6 * | 1,3-9, 11-15 | |

TECHNICAL FIELDS SEARCHED (IPC)

G06T
G06F

The present search report has been drawn up for all claims

| Place of search | Date of completion of the search | Examiner |
|---|---|---|
| Munich | 26 June 2015 | Turina, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 7087

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2015

| Patent document cited in search report | | | Publication date | Patent family member(s) | | | Publication date |
|---|---|---|---|---|---|---|---|
| US 2008198175 | A1 | | 21-08-2008 | NONE | | | |
| EP 1674977 | A2 | | 28-06-2006 | CN | 1808362 | A | 26-07-2006 |
| | | | | CN | 101593077 | A | 02-12-2009 |
| | | | | EP | 1674977 | A2 | 28-06-2006 |
| | | | | JP | 2006185443 | A | 13-07-2006 |
| | | | | KR | 20060071353 | A | 26-06-2006 |
| | | | | US | 2006132457 | A1 | 22-06-2006 |
| | | | | US | 2010060605 | A1 | 11-03-2010 |
| | | | | US | 2012274591 | A1 | 01-11-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BIE et al.** user-aware image cloning. *International Journal of Computer Graphics,* vol. 29 (6-8